# FASCICULE DE BREVET EUROPEEN

(11) **EP 3 650 959 B1**
(45) Date de publication et mention de la délivrance du brevet: **24.12.2025**
(21) Numéro de dépôt: 18205004.7
(22) Date de dépôt: 07.11.2018
(51) Int. Cl.: G04G 21/00, G06F 3/01

(54) **PROCEDE DE DIFFUSION D'UNE ALERTE DESCRIPTIVE D'UN MESSAGE DE NOTIFICATION**
VERBREITUNGSVERFAHREN EINER BESCHREIBENDEN WARNMELDUNG EINER MITTEILUNGSNACHRICHT
METHOD FOR DISTRIBUTING A DESCRIPTIVE ALERT OF A NOTIFICATION MESSAGE

(43) Date de publication de la demande: 13.05.2020
(73) Titulaire: Tissot S.A., 2400 Le Locle (CH)
(72) Inventeur: FRANZI, Edoardo, 1400 Cheseaux-Noréaz (CH); PORRET, Alain-Serge, 2000 Neuchâtel (CH)
(74) Mandataire: ICB SA

(56) Documents cités:
- EP-A1- 2 945 133
- WO-A1-2016/168097
- WO-A1-2017/177409
- CN-A- 105 336 204
- US-A1- 2015 154 853

## Description

### Domaine technique

La présente invention concerne un procédé de diffusion d'une alerte descriptive d'un message de notification.

L'invention concerne également une montre mettant en œuvre ce procédé ainsi qu'un programme d'ordinateur.

### Art antérieur

Dans l'état de la technique, la réception de messages de notification est classiquement signalée dans les montres par une alerte consistant en l'émission d'un signal sonore. Toutefois, un telle émission de signal sonore alertant de la réception de ces messages, peut engendrer une gêne chez le porteur de la montre lorsqu'elle vient perturber le silence régnant dans des lieux où il est impérativement requis. US 2015/154853 A1 divulgue une montre intelligente connectée mettant en œuvre un dispositif générateur de stimuli qui émet, selon l'état de fonctionnement de la montre, un signal de notification qui peut prendre différentes formes vibratoires correspondant à l'événement détecté, à la personne associée ou aux caractéristiques du message. Ce document prévoit une pluralité d'actionneurs vibrants distinguant différents types de notification et des formes vibratoires associées transmises au porteur via l'interface de rendu tactile.

Pour pallier cet inconvénient, on connaît des montres comprenant une interface vibrante qui émet alors des vibrations en guise d'alerte, lors de la réception d'un message de notification.

Cependant un inconvénient majeur de ces montres est lié au fait que le porteur ne peut pas déterminer la nature du message de notification sur la seule base des vibrations de l'interface vibrante, il est systématiquement contraint pour cela de consulter le cadran de sa montre où le contenu de ce message de notification est alors visible.

On comprend qu'il existe alors un besoin de trouver une solution alternative, notamment qui ne présente pas les inconvénients de l'art antérieur.

### Résumé de l'invention

Un but de la présente invention est par conséquent de proposer un procédé de diffusion d'une alerte descriptive d'un message de notification permettant au porteur de la montre de déterminer la nature et la teneur de ce message de notification à partir de l'alerte émise par cette montre.

Dans ce dessein, l'invention porte sur un procédé de diffusion d'une alerte descriptive d'un message de notification à un porteur d'une montre, selon la revendication 1.

Dans d'autres modes de réalisation :
- le procédé comprend une étape de traitement desdites données d'informations comportant une sous-étape d'extraction d'au moins une caractéristique descriptive desdites données ;
- la sous-étape d'extraction comprend une phase de sélection d'au moins une caractéristique descriptive dans les données d'informations en fonction d'un critère d'extraction ;
- le critère d'extraction est préalablement défini par le porteur de la montre et comporte notamment le nombre et ladite au moins une caractéristique descriptive à sélectionner ;
- l'étape d'envoi comprend une sous-étape de sélection d'un critère de conception du signal à partir de ladite au moins une caractéristique descriptive extraite des données d'informations ;
- le critère de conception comprend des données de fonctionnement de l'interface de rendu tactile comportant au moins une fréquence et au moins une amplitude définies pour chaque élément vibrant constituant ladite interface ;
- les données d'informations comprennent un ensemble de caractéristiques descriptives relatif au message de notification ;
- le signal comprend des instructions de pilotage distinctes de chaque élément vibrant de l'interface de rendu tactile durant la durée de diffusion du message.

L'invention porte également sur une montre notamment connectée, mettant en œuvre ce procédé, comprenant une unité de traitement et une interface de rendu tactile pourvue d'une pluralité d'éléments vibrants, ladite unité de traitement étant connectée à ladite interface de rendu tactile.

Avantageusement, l'interface de rendu tactile est définie dans toute ou juste une portion d'une partie de la montre, ladite partie étant destinée à être en contact avec la peau du porteur.

L'invention porte aussi sur un programme d'ordinateur comprenant des instructions de code de programme pour l'exécution des étapes de ce procédé lorsque ledit programme d'ordinateur est exécuté par une unité de traitement d'une montre.

### Brève description des figures

D'autres particularités et avantages ressortiront clairement de la description qui en est faite ci-après, à titre indicatif et nullement limitatif, en référence aux figures annexées, dans lesquelles :
- la figure 1 représente un logigramme portant sur un procédé de diffusion d'une alerte descriptive d'un message de notification, selon un mode de réalisation de l'invention, et
- la figure 2 représente une montre mettant en œuvre ce procédé, selon le mode de réalisation de l'invention.

### Description détaillée de l'invention

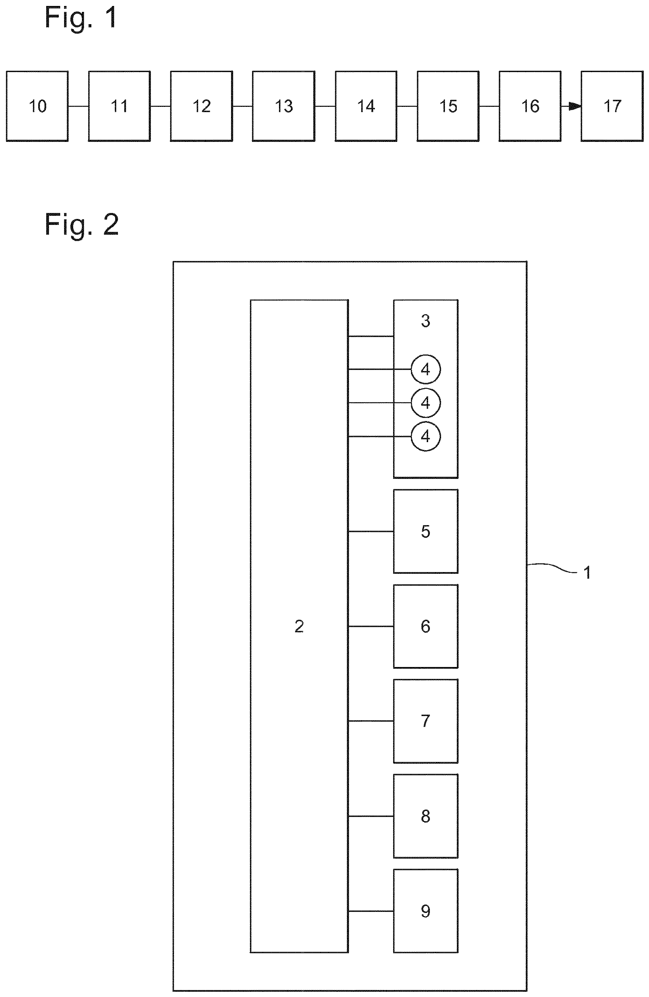

Sur la figure 1 est illustré un procédé de diffusion d'une alerte descriptive d'un message de notification à un porteur d'une montre 1. Ce procédé vise à aviser/informer le porteur de la montre 1 de l'identification d'un évènement relatif à une ou plusieurs fonctions de la montre 1 et ce, par l'intermédiaire d'une diffusion d'une alerte descriptive spécifique à l'évènement identifié. Cette alerte est dite descriptive parce qu'elle ne se limite pas seulement à signaler la réception du message de notification mais en communique aussi le contenu en précisant au porteur l'événement identifié. Une telle alerte est également discrète et silencieuse du fait notamment qu'elle est diffusée sans émission d'un son par une interface sonore de cette montre 1. On notera que dans cette montre 1, le message de notification comprend un contenu qui porte donc sur l'identification d'un événement concernant une fonction de la montre, il peut par exemple s'agir d'une fonction relative à la surveillance de la fréquence cardiaque du porteur de la montre 1 et l'évènement identifié à un dépassement de seuil par la fréquence cardiaque mesurée du porteur.

Dans ce contexte, l'alerte descriptive du message de notification diffusée par la montre 1 à destination du porteur, notamment par l'intermédiaire d'une interface de rendu tactile 3, est une alerte tactile. En effet, une telle interface 3 permet au porteur de percevoir l'alerte descriptive par voie tactile. Autrement dit, la réception de cette alerte par le porteur fait appel à une perception sensorielle tactile de ce dernier. Dans un exemple le porteur peut percevoir une alerte sur sa peau correspondant à une sensation d'une caresse pour un événement identifié portant sur un appel manqué provenant de sa petite amie ou encore dans une variante, il peut percevoir pour cette alerte la réalisation sur sa peau d'un contour de la forme d'un cœur.

Un tel procédé est mis en œuvre par une montre 1 notamment une montre connectée illustrée sur la figure 2. Une telle montre 1 comprend de manière non exhaustive et non limitative :
- une unité de traitement 2 comportant des ressources matérielles et logicielles en particulier au moins un processeur coopérant avec des éléments de mémoire ;
- l'interface de rendu tactile 3 comportant une pluralité d'éléments vibrants 4 tels que des transducteurs susceptibles de convertir un signal électrique en des oscillations mécaniques (par exemple : une pluralité d'éléments piézoélectriques ;
- un cadran d'affichage 5 hybride pourvu d'une première composante d'affichage analogique et d'une deuxième composante d'affichage numérique et/ou alphanumérique ;
- une interface sonore 6 telle qu'un haut-parleur ;
- un module de communication 7 ;
- un mouvement 8 mécanique ou électronique, et
- des capteurs 9 environnementaux, comportementaux et/ou physiologiques.

Cette unité de traitement 2 de la montre 1 est reliée/connectée entre autres à l'interface sonore 6, à l'interface de rendu tactile 3, aux éléments vibrants 4, au cadran d'affichage 5, au module de communication 7, au mouvement 8 et aux capteurs 9 environnementaux, comportementaux et/ou physiologiques.

Dans cette montre 1, l'interface de rendu tactile 3 est définie dans toute ou juste une portion d'une partie de la montre 1, ladite partie étant destinée à être en contact avec la peau du porteur par exemple celle définie au niveau de son poignée. Autrement dit, cette interface de rendu tactile 3 peut être comprise dans/sur une face de contact avec la peau du fond de la boite de montre et/ou dans/sur une face de contact avec cette peau du bracelet. Dans un premier exemple de réalisation, les éléments vibrants 4 de cette interface de rendu tactile 3 peuvent être agencés sur tout ou partie d'une face interne du fond de la boite de montre 1. Dans un deuxième exemple, ces éléments vibrants 4 peuvent être agencés dans le bracelet ou dans la face de contact de ce bracelet, en particulier dans au moins un brin de ce bracelet. On notera dans cette exemple que la face de contact de ce bracelet est de préférence déformable. Dans un troisième exemple, ces éléments vibrants 4 peuvent être agencés dans la face de contact du fond de la boite de montre, cette face de contact étant de préférence déformable. Dans un quatrième exemple, l'interface de rendu tactile 3 comprend une membrane de support déformable dans laquelle sont agencés les éléments vibrants 4. Dans cette exemple, cette membrane peut alors être une pièce rapportée à la montre 1 en étant fixée à la face de contact du fond de la boite de montre et/ou à la face de contact du bracelet. Dans une variante, cette membrane peut être venue de matière avec la face de contact du fond de la boite de montre 1 et/ou de la face de contact du bracelet.

On notera que dans cette montre 1, chaque élément vibrant 4 est relié/connecté distinctement à l'unité de traitement 2. Un tel élément vibrant 4 peut par exemple être fabriqué en une céramique piézoélectrique ou en un matériau piézopolymère souple (polyfluorure de vinylidène - PVDF), et peut avoir, de manière non limitative, une forme circulaire et/ou être un film ou une pellicule. Un tel élément vibrant 4 peut avoir des dimensions caractéristiques de l'ordre de quelques millimètres carrés voire de quelques micromètres carrés avec une épaisseur faible d'environ quelques millimètres voire quelques micromètres. Dans cette configuration l'unité de traitement 2 est apte à piloter individuellement et/ou distinctement chaque élément vibrant 4 de cette interface de rendu tactile 3.

Dans cette montre 1, le module de communication 8 est configuré pour établir une connexion avec un système de réseaux cellulaires en comprenant notamment une carte SIM (acronyme de « Subscriber Identity Module ») ou avec un système de réseaux locaux sans fil WLAN, et est aussi apte à mettre en œuvre des technologies de communication comme par exemple Bluetooth. Dans ces conditions, la montre 1 est apte à échanger des données avec un serveur distant, un ordinateur ou encore un ordiphone.

Par ailleurs, les capteurs environnementaux 9 de la montre 1, sont spécifiquement adaptés pour mesurer des paramètres environnementaux comme par exemple la température, la pression atmosphérique, etc... S'agissant des capteurs 9 comportementaux, ils sont aptes à mesurer tous types de caractéristiques comportementales du porteur de la montre 1 comme par exemple les mouvements ou les gestes réalisés par ce dernier. Pour ce faire, ces capteurs 9 comportementaux peuvent comprendre un ou plusieurs capteurs inertiels de type accéléromètre, gyroscope ou gyromètre multiaxes miniature tels que des capteurs multiaxes fabriqués en technologie MEMS, capables de détecter des vitesses angulaires et des accélérations linéaires selon plusieurs axes associant accéléromètres et/ou gyroscopes. Concernant les capteurs 9 physiologiques, ils sont aptes à mesurer les paramètres relatifs au fonctionnement d'un organisme du porteur tels que, par exemple, le pouls, la saturation du sang en oxygène, l'impédance de la peau, la tension artérielle, le rythme respiratoire, l'arythmie respiratoire, la température cutanée, le taux de sudation, la saturation du sang en oxygène ou le débit sanguin.

Un tel procédé comprend une étape de réception 10 par l'unité de traitement 2 de la montre 1 de données d'informations comprenant le message de notification relatif à l'identification d'un évènement concernant une fonction de la montre. Cette montre comprend en effet un ensemble de fonctions. Ces fonctions concernent de manière non-exhaustive et non-limitative : la gestion d'appels téléphoniques, la gestion de messages courts de type SMS ou MMS, la gestion de messages instantanés, la mesure d'une pression atmosphérique, la mesure d'une altitude, la mesure d'une température, la fourniture de résultats sportifs, d'assistance de navigation/guidage, la mesure de fréquence cardiaque, la mesure de nombre de pas, d'agenda, d'alarme etc...

Dans ce contexte, les données d'informations comprennent par exemple un ensemble de caractéristiques descriptives relatif à un message de notification. Ces données d'informations relatives à un message de notification qui résulte de l'identification d'un événement relatif à des fonctions de la montre 1, sont reçues par l'unité de traitement 2 en provenance des capteurs 9 de la montre 1 ou de serveurs distants. Dans ce contexte, on notera que l'identification d'un événement par l'unité de traitement 2, peut correspondre de manière non limitative et non exhaustive à :
- la détermination d'un dépassement d'un seuil par une mesure provenant d'un ou de plusieurs capteurs 9 notamment dans le cas d'une surveillance par cette unité de traitement d'un paramètre comportemental ou physiologique du porteur ou d'un paramètre environnemental, etc...;
- la réception d'un appel téléphonique manqué reçu par l'unité de traitement 2 en provenance du module de communication 7 ;
- la réception d'un message court ou instantané ou encore d'un courrier électronique et reçu par l'unité de traitement 2 de serveurs distants via le module de communication ;
- l'activation d'un mode de fonctionnement de la montre 1 ;
- un déclenchement d'une alarme telle que : une alarme pour le réveil, alarme pour un rendez-vous, alarme pour la prise d'un médicament ;
- etc...

Dans ces conditions, des données d'informations comprennent un ensemble de caractéristiques descriptives relatif à un message de notification, cet ensemble comprenant par exemple :
- une catégorie de l'événement identifié, par exemple : alarme pour le réveil, alarme pour un rendez-vous, alarme pour la prise d'un médicament, appel manqué, nouvelle mesure d'un paramètre comportemental ou physiologique du porteur ou d'un paramètre environnemental, etc... ;
- heure/date de l'événement identifié, par exemple : heure de l'appel manqué, heure de la mesure, etc...

En complément, on notera que lorsque le message de notification est relatif par exemple à un appel téléphonique manqué ou encore à la réception d'un nouveau message court ou instantané ou d'un nouveau courrier électronique, ces caractéristiques peuvent comprendre en plus :
- des éléments de contact de l'expéditeur/l'appelant, par exemple : nom, prénom, etc... ;
- le profil de l'expéditeur/l'appelant, par exemple : membre de la famille, ami proche, collègue de travail, client, petit (e) ami (e), époux/épouse, etc...

Le procédé prévoit ensuite une étape de traitement 11 des données d'informations comprenant le message de notification relatif à l'identification d'un évènement concernant une fonction de la montre. Cette étape 11 comprend une sous-étape d'extraction 12 d'au moins une caractéristique descriptive desdites données, la sous-étape 12 prévoyant une phase de sélection 13 d'au moins une caractéristique descriptive dans les données d'informations en fonction d'un critère d'extraction. Ce critère d'extraction est préalablement défini par le porteur de la montre 1 et comporte notamment le nombre et le type de caractéristique descriptive à sélectionner. Un tel critère permet donc d'identifier au moins une caractéristique à sélectionner parmi la pluralité de caractéristiques comprises dans ces données d'informations. A titre d'exemple, si l'ensemble des caractéristiques descriptives est relatif à un message de notification en relation avec un évènement identifié portant sur un appel téléphonique manqué de l'époux/l'épouse du porteur, et que le critère d'extraction prévoit la sélection de deux caractéristiques dont la première doit concerner la catégorie de l'événement identifié et la seconde le profil de l'appelant, alors les caractéristiques extraites correspondront pour la première caractéristique à « un appel téléphonique » et pour la seconde à « l'époux/l'épouse ».

Un tel critère d'extraction permet de définir le ou les caractéristiques descriptives qui participent à la conception de l'alerte descriptive à diffuser au porteur.

Le procédé comprend ensuite une étape d'envoi 14 d'un signal d'alerte descriptive relatif audites données d'informations reçues, à l'interface de rendu tactile 3 de la montre 1, ladite interface 3 étant configurée pour transmettre ladite alerte au porteur de la montre 1. Cette étape 14 comprend une sous-étape de sélection 15 d'un critère de conception du signal d'alerte à partir de ladite au moins une caractéristique descriptive extraite des données d'informations. Ce critère de conception est défini en fonction d'une ou de plusieurs caractéristiques descriptives qui sont susceptibles d'être extraites des données d'informations. Ce critère de conception est de préférence préalablement configuré par le porteur de la montre comme d'autres critères de conception archivés dans les éléments de mémoire de l'unité de traitement 2. Un tel critère de conception comprend un scénario de fonctionnement des éléments vibrants constituant l'interface de rendu tactile 3. Ce critère de conception participe alors à la conception du signal relatif à l'alerte descriptive destinée à être transmise au porteur de la montre 1. A titre d'exemple, si la première caractéristique est « un appel téléphonique » et la seconde « l'époux/l'épouse » du porteur alors le critère de conception du signal comprend un scénario de fonctionnement qui vise à concevoir une alerte descriptive tactile spécifiquement définie pour ces caractéristiques et qui informe de manière tactile le porteur de la montre 1. Cette alerte tactile peut correspondre par exemple à une sensation de caresse perçue par le porteur ou encore dans une variante à la réalisation d'un symbole/motif sur la peau du porteur comme le contour de la forme d'un cœur.

On notera que lorsque le message comprend une représentation graphique telle qu'une image de type émoticône, l'unité de traitement est apte à mettre en œuvre un traitement numérique de cette image afin d'identifier par exemple l'objet principal de cette image et d'en définir la forme essentielle pour une représentation de cette forme sur la peau du porteur.

Le critère de conception du signal d'alerte descriptive comprend des données de fonctionnement de l'interface de rendu tactile 3. Plus précisément, ces données de fonctionnement de l'interface de rendu tactile 3 comportent au moins une fréquence et au moins une amplitude définies pour chaque élément vibrant 4 constituant ladite interface 3. En particulier, ces données de fonctionnement comprennent :
- la durée de diffusion de l'alerte descriptive ;
- au moins une instant/période de fonctionnement de chaque élément vibrant 4 par rapport à la durée de diffusion soit :
   ▪ un unique instant de fonctionnement durant tout ou partie de la durée de diffusion de l'alerte descriptive, ou
   ▪ une séquence d'instants de fonctionnement durant la durée de diffusion de l'alerte descriptive, et
- pour chaque instant fonctionnement :
   ▪ une fréquence de vibration et une amplitude de vibration, ou
   ▪ une fréquence de vibration et une séquence d'amplitudes de vibration, ou
   ▪ une séquence de fréquences de vibration et une séquence d'amplitudes de vibration ou
   ▪ une séquence de fréquences de vibration et une amplitude de vibration.

On notera que la séquence de fréquences de vibration peut comprendre que des fréquences similaires ou sensiblement similaires, ou que des fréquences différentes ou sensiblement différentes, ou encore une combinaison de fréquences similaires et différentes. De même, la séquence d'amplitudes peut comprendre que des amplitudes similaires ou sensiblement similaires, ou que des amplitudes différentes ou sensiblement différentes, ou encore une combinaison d'amplitudes similaires et différentes.

Cette étape 14 comprend ensuite une sous-étape de génération 16 du signal d'alerte à partir dudit critère de conception. Lors de cette sous-étape 16, l'unité de traitement 2 conçoit à partir de ce critère de conception, le signal qui permet de piloter individuellement et/ou distinctement chaque élément vibrant 4 de cette interface de rendu tactile 3. Ce signal est ensuite envoyé par l'unité de traitement à l'interface de rendu tactile 3 lors d'une sous-étape de transmission 17 du signal. Un tel signal comprend des instructions de pilotage distinctes de chaque élément vibrant 4 durant la durée de diffusion de l'alerte descriptive.

A réception de ce signal, l'interface de rendu tactile 3 émet/diffuse cette de l'alerte descriptive tactile sur la peau du porteur. Selon l'invention, cette alerte tactile correspond à l'application d'une représentation graphique sur la peau du porteur. Ainsi, cette alerte tactile peut correspondre de manière non limitative et non exhaustive à :
- la réalisation d'un contour d'une représentation graphique tel qu'un motif/symbole, une lettre, un chiffre de manière tactile c'est-à-dire comme cela est réalisable par le déplacement de la pointe d'un doigt d'un individu sur la peau du porteur ;
- l'application de la représentation graphique sur la peau du porteur par exemple l'application de la forme d'une lettre ou d'un symbole/motif ;
- la génération de phénomène ondulatoire et/ou vibratoire visant par exemple à créer pour le porteur une perception tactile douce, agréable, sensuelle ou à l'inverse désagréable.

## Revendications

1. Procédé de diffusion d'une alerte descriptive d'un message de notification à un porteur d'une montre (1), le procédé comprenant les étapes suivantes :
- réception (10) par une unité de traitement (2) de la montre (1) de données d'informations comprenant un message de notification relatif à l'identification d'un évènement concernant une fonction de la montre (1), et
- envoi (14) d'un signal d'alerte descriptive relatif auxdites données d'informations reçues à une interface de rendu tactile (3) de la montre (1)
**caractérisé en ce que**:
- le message de notification comprend une représentation graphique,
- ladite interface de rendu tactile est configurée pour transmettre ladite alerte descriptive correspondant à l'application d'une représentation graphique sur la peau du porteur et, l'unité de traitement est apte à mettre en œuvre un traitement numérique de cette représentation graphique afin d'identifier l'objet principal de cette représentation graphique et d'en définir la forme essentielle pour une représentation de cette forme sur la peau du porteur.

2. Procédé selon la revendication précédente, **caractérisé en ce qu'**il comprend une étape de traitement (11) desdites données d'informations comportant une sous-étape d'extraction (12) d'au moins une caractéristique descriptive desdites données.

3. Procédé selon la revendication précédente, **caractérisé en ce que** la sous-étape d'extraction (12) comprend une phase de sélection (13) d'au moins une caractéristique descriptive dans les données d'informations en fonction d'un critère d'extraction.

4. Procédé selon la revendication précédente, **caractérisé en ce que** le critère d'extraction est préalablement défini par le porteur de la montre et comporte notamment le nombre et ladite au moins une caractéristique descriptive à sélectionner.

5. Procédé selon l'une quelconque des revendications 3 et 4, **caractérisé en ce que** l'étape d'envoi (14) comprend une sous-étape de sélection (15) d'un critère de conception du signal à partir de ladite au moins une caractéristique descriptive extraite des données d'informations.

6. Procédé selon la revendication précédente, **caractérisé en ce que** le critère de conception comprend des données de fonctionnement de l'interface de rendu tactile (3) comportant au moins une fréquence et au moins une amplitude définies pour chaque élément vibrant (4) constituant ladite interface (3).

7. Procédé selon l'une quelconque des revendications précédentes, **caractérisé en ce que** les données d'informations comprennent un ensemble de caractéristiques descriptives relatif au message de notification.

8. Procédé selon l'une quelconque des revendications précédentes, **caractérisé en ce que** le signal comprend des instructions de pilotage distinctes de chaque élément vibrant (4) de l'interface de rendu tactile (3) durant la durée de diffusion du message.

9. Montre (1) notamment connectée, mettant en œuvre le procédé selon l'une quelconque des revendications précédentes, comprenant une unité de traitement (2) et une interface de rendu tactile (3) pourvue d'une pluralité d'éléments vibrants (4), ladite unité de traitement (2) étant connectée à ladite interface de rendu tactile (3).

10. Montre (1) selon la revendication précédente, **caractérisée en ce que** l'interface de rendu tactile (3) est définie dans toute ou juste une portion d'une partie de la montre (1), ladite partie étant destinée à être en contact avec la peau du porteur.

11. Programme d'ordinateur comprenant des instructions de code de programme pour l'exécution des étapes (10 à 15) du procédé selon l'une quelconque des revendications 1 à 8 lorsque ledit programme d'ordinateur est exécuté par une unité de traitement (2) d'une montre (1).

## Patentansprüche

1. Verfahren für ein Übertragen einer beschreibenden Warnung einer Benachrichtigungsnachricht an einen Träger einer Uhr (1), das Verfahren umfassend die folgenden Schritte:
- Empfangen (10), durch eine Verarbeitungseinheit (2) in der Uhr (1), von Informationsdaten, umfassend eine Benachrichtigungsnachricht, die sich auf die Identifizierung eines Ereignisses bezieht, das eine Funktion der Uhr (1) betrifft, und
- Senden (14) eines beschreibenden Warnsignals, das sich auf die empfangenen Informationsdaten bezieht, an eine taktile Anzeigeschnittstelle (3) auf der Uhr (1), **dadurch gekennzeichnet, dass**
- die Benachrichtigungsnachricht eine grafische Darstellung umfasst.
- die taktile Anzeigeschnittstelle eingerichtet ist, die beschreibende Warnung entsprechend der Anwendung einer grafischen Darstellung auf die Haut des Trägers zu übertragen, und die Verarbeitungseinheit gestaltet ist, diese grafische Darstellung digital zu verarbeiten, um das Hauptobjekt dieser grafischen Darstellung zu identifizieren und ihre wesentliche Form für eine Darstellung dieser Form auf der Haut des Trägers zu definieren.

2. Verfahren nach dem vorhergehenden Anspruch, **dadurch gekennzeichnet, dass** es einen Verarbeitungsschritt (11) umfasst, in dem die Informationsdaten verarbeitet werden, umfassend einen Extraktionsunterschritt (12), in dem mindestens eine beschreibende Charakteristik der Daten extrahiert wird.

3. Verfahren nach dem vorhergehenden Anspruch, **dadurch gekennzeichnet, dass** der Extraktionsunterschritt (12) eine Auswahlphase (13) umfasst, in der mindestens eine beschreibende Charakteristik aus den Informationsdaten gemäß einem Extraktionskriterium ausgewählt wird.

4. Verfahren nach dem vorhergehenden Anspruch, **dadurch gekennzeichnet, dass** das Extraktionskriterium zuvor von dem Träger der Uhr definiert wird und insbesondere die Nummer und die mindestens eine auszuwählende beschreibende Charakteristik umfasst.

5. Verfahren nach einem der Ansprüche 3 und 4, **dadurch gekennzeichnet, dass** der Sendeschritt (14) einen Auswahlunterschritt (15) umfasst, in dem ein Signalgestaltungskriterium basierend auf der mindestens einer aus den Informationsdaten extrahierten beschreibenden Charakteristik ausgewählt wird.

6. Verfahren nach dem vorhergehenden Anspruch, **dadurch gekennzeichnet, dass** das Gestaltungskriterium Betriebsdaten für die taktile Anzeigeschnittstelle (3) umfasst, die mindestens eine Frequenz und mindestens eine Amplitude umfassen, die für jedes die Schnittstelle (3) bildende Vibrationselement (4) definiert sind.

7. Verfahren nach einem der vorhergehenden Ansprüche, **dadurch gekennzeichnet, dass** die Informationsdaten einen Satz beschreibender Charakteristika umfassen, die sich auf die Benachrichtigungsnachricht beziehen.

8. Verfahren nach einem der vorhergehenden Ansprüche, **dadurch gekennzeichnet, dass** das Signal separate Steuerbefehle für jedes Vibrationselement (4) auf der taktilen Anzeigeschnittstelle (3) für die Dauer der Nachrichtenübertragung umfasst.

9. Uhr (1), insbesondere eine Smartwatch, die das Verfahren nach einem der vorhergehenden Ansprüche verwendet, umfassend eine Verarbeitungseinheit (2) und eine taktile Anzeigeschnittstelle (3), die mit einer Mehrzahl von Vibrationselementen (4) versehen ist, wobei die Verarbeitungseinheit (2) mit der taktilen Anzeigeschnittstelle (3) verbunden ist.

10. Uhr (1) nach dem vorhergehenden Anspruch, **dadurch gekennzeichnet, dass** die taktile Anzeigeschnittstelle (3) in der gesamten oder nur in einem Abschnitt eines Teils der Uhr (1) definiert ist, wobei dieser Teil gestaltet ist, mit der Haut des Trägers in Kontakt zu sein.

11. Computerprogramm, umfassend Programmcodeanweisungen für ein Ausführen der Schritte (10 bis 15) in dem Verfahren nach einem der Ansprüche 1 bis 8, wenn das Programm von einer Verarbeitungseinheit (2) in einer Uhr (1) ausgeführt wird.

## Claims

1. A method for transmitting a descriptive alert of a notification message to a wearer of a watch (1), the method comprising the following steps:
- reception (10) by a processing unit (2) in the watch (1) of information data comprising a notification message relating to the identification of an event pertaining to a function of the watch (1), and
- sending (14) a descriptive alert signal relating to said received information data to a tactile display interface (3) on the watch (1),
**characterised in that**
- the notification message comprises a graphical representation,
- said tactile display interface is configured to transmit said descriptive alert corresponding to the application of a graphical representation to the wearer's skin and the processing unit is designed to use digital processing of this graphical representation to identify the main object of this graphical representation and to define its essential form for a representation of this form on the wearer's skin.

2. The method according to the preceding claim, **characterised in that** it comprises a processing step (11) in which said information data are processed, comprising an extraction substep (12) in which at least one descriptive characteristic of said data is extracted.

3. The method according to the preceding claim, **characterised in that** the extraction substep (12) comprises a selection phase (13) in which at least one descriptive characteristic is selected from the information data according to an extraction criterion.

4. The method according to the preceding claim, **characterised in that** the extraction criterion is defined beforehand by the wearer of the watch and comprises in particular the number and said at least one descriptive characteristic to be selected.

5. The method according to any of claims 3 and 4, **characterised in that** the sending step (14) comprises a selection substep (15) in which a signal design criterion is selected on the basis of said at least one descriptive characteristic extracted from the information data.

6. The method according to the preceding claim, **characterised in that** the design criterion comprises operating data for the tactile display interface (3) comprising at least one frequency and at least one amplitude defined for each vibrating element (4) forming said interface (3).

7. The method according to any of the preceding claims, **characterised in that** the information data comprises a set of descriptive characteristics relating to the notification message.

8. The method according to any of the preceding claims, **characterised in that** the signal comprises separate control instructions for each vibrating element (4) on the tactile display interface (3) for the duration of the message transmission.

9. A watch (1), in particular a smartwatch, implementing the method according to any of the preceding claims, comprising a processing unit (2) and a tactile display interface (3) provided with a plurality of vibrating elements (4), said processing unit (2) being connected to said tactile display interface (3).

10. The watch (1) according to the preceding claim, **characterised in that** the tactile display interface (3) is defined in all or only a portion of a part of the watch (1), said part being designed to be in contact with the skin of the wearer.

11. A computer program comprising program code instructions for executing the steps (10 to 15) in the method according to any of claims 1 to 8 when said computer program is executed by a processing unit (2) in a watch (1).
